# EUROPEAN PATENT APPLICATION

(11) **EP 4 597 291 A1**
(43) Date of publication of application: **06.08.2025**
(21) Application number: 25154291.6
(22) Date of filing: 28.01.2025
(51) Int. Cl.: G06F 3/12, G06F 9/451, H04N 1/00, G06F 3/048

(54) **SCREEN DISPLAY METHOD AND COMMUNICATION APPARATUS**

(30) Priority: 01.02.2024 JP 2024014309
(71) Applicant: Sharp Kabushiki Kaisha, Sakai City, Osaka 590-8522 (JP)
(72) Inventor: ONISHI, Takahisa, Sakai City, Osaka, 590-8522 (JP)
(74) Representative: Müller Hoffmann & Partner

(57) **Abstract**

Provided is a screen display method of a communication apparatus which displays a screen group including screens having identical screen attributes as an initial setting wizard executed at the time of initial activation, in which the screen group includes at least a first screen group having a screen attribute which receives the essential device setting to accommodate various legal regulations, a second screen group having a screen attribute which receives a device setting that is recommended to accommodate the various legal regulations, and a third screen group having a screen attribute which receives one or more device settings necessary for the user to use the communication apparatus.

## Description

### BACKGROUND OF THE INVENTION

### Field of the Invention

The present disclosure relates to, for example, a screen display method. This application is based upon and claims the benefit of priority from prior Japanese Patent Application No. 2024-014309, filed February 1, 2024, the contents of which are incorporated herein by reference.

### Description of the Background Art

In accordance with the development of laws such as the Cyber Resilience Act, the EU Radio Equipment Directive 2014/53/EU (RED), and the IoT Cybersecurity Improvement Act, for example, it is required that measures for complying with the legal regulations as mentioned above be taken for communication apparatuses brought to the market of the regions and countries to which these legal regulations are applied.

Incidentally, in an image forming apparatus such as a multifunction peripheral, there is known a function of making, in an interactive manner or the like with the user (hereinafter referred to as an initial setting wizard in the present disclosure), device settings that are necessary for driving the apparatus at the time of initial activation after power has been turned on or at the time of activation after the apparatus has been initialized (for example, refer to Patent Document 1).

An object of the present disclosure is to provide a screen display method and the like which relates to a device setting via an initial setting wizard and is capable of improving the operational feeling of the user.

### PRIOR ART DOCUMENT

### PATENT DOCUMENT

Patent Document 1: Japanese Unexamined Patent Application Publication No. 2015-156206

### SUMMARY OF THE INVENTION

In order to solve the above problem, a screen display method according to the present disclosure pertains to a screen display method of a communication apparatus, and displays a screen group including screens having identical screen attributes as an initial setting wizard executed at the time of initial activation, in which the screen group is characterized by including at least a first screen group having a screen attribute which receives the essential device setting to accommodate various legal regulations, a second screen group having a screen attribute which receives a device setting that is recommended to accommodate the various legal regulations, and a third screen group having a screen attribute which receives one or more device settings necessary for the user to use the communication apparatus.

Further, a communication apparatus according to the present disclosure is provided with: a display which displays a screen group including screens having identical screen attributes as an initial setting wizard executed at the time of initial activation; and one or more controllers which control the display of the initial setting wizard on the display, in which the screen group is characterized by including at least a first screen group having a screen attribute which receives the essential device setting to accommodate various legal regulations, a second screen group having a screen attribute which receives a device setting that is recommended to accommodate the various legal regulations, and a third screen group having a screen attribute which receives one or more device settings necessary for the user to use the communication apparatus.

According to the present disclosure, it is possible to provide a screen display method and the like which relates to a device setting via an initial setting wizard and is capable of improving the operational feeling of the user.

### BRIEF DESCRIPTION OF THE DRAWINGS

FIG. 1 is a diagram illustrating an overall configuration of an image forming apparatus according to a first embodiment.
FIG. 2A is a diagram illustrating a device configuration of the image forming apparatus according to the first embodiment.
FIG. 2B is a diagram illustrating a functional configuration of the image forming apparatus according to the first embodiment.
FIG. 3 is a table for explaining a wizard screen according to the first embodiment.
FIG. 4 is a flowchart illustrating a flow of processing according to the first embodiment.
FIG. 5 is a diagram illustrating an operation example according to the first embodiment.
FIG. 6 is a diagram illustrating an operation example according to the first embodiment.
FIG. 7 is a diagram illustrating an operation example according to the first embodiment.
FIG. 8 is a diagram illustrating an operation example according to the first embodiment.
FIG. 9 is a diagram illustrating an operation example according to the first embodiment.
FIG. 10 is a diagram illustrating an operation example according to the first embodiment.
FIG. 11 is a diagram illustrating an operation example according to the first embodiment.
FIG. 12 is a diagram illustrating an operation example according to the first embodiment.
FIG. 13 is a diagram illustrating an operation example according to the first embodiment.
FIG. 14 is a diagram illustrating an operation example according to the first embodiment.
FIG. 15 is a diagram illustrating an operation example according to the first embodiment.
FIG. 16 is a diagram illustrating an operation example according to the first embodiment.
FIG. 17 is a flowchart illustrating a flow of processing according to a second embodiment.
FIG. 18 is a table illustrating the types of initial setting wizard according to the second embodiment.

### DESCRIPTION OF THE PREFERRED EMBODIMENTS

Embodiments of the present disclosure will be described below with reference to the accompanying drawings. In the present disclosure, for example, a multifunction peripheral capable of implementing jobs related to copying, faxing, e-mail transmission, and the like, in a single housing will be described as one form of an image forming apparatus including a communication apparatus according to the present disclosure. Note that the following embodiments are presented as an example for describing the present disclosure, and the technical content as recited in the appended claims is not limited by the following description.

In Europe, the United States of America, and Asian countries including Japan, legal regulations for enhancing security for Internet of Things (IoT) devices (communication apparatuses, in particular) are being developed. It is essential that communication apparatuses brought to the market in these regions, countries, and the like, should comply with the legal regulations, and some of these communication apparatuses require the user to make the device setting necessary for the compliance.

Here, for example, an image forming apparatus according to a conventional technology is configured such that a specific device setting can be made via an initial setting wizard which is inevitably executed when the image forming apparatus in a factory shipment state is initially activated.

However, in the initial setting wizard according to the conventional technology, only the setting items related to automatic settings of a sender of transmission processing are referred to. That is, device settings for compliance with the legal regulations and device settings which bring more merits to the user if the settings are made at the time of the initial activation are not referred to.

In the present disclosure, the following embodiments realize a screen display method and the like which relates to a device setting via an initial setting wizard and is capable of improving the operational feeling of the user.

### 1 First Embodiment

### 1.1 Functional Configuration

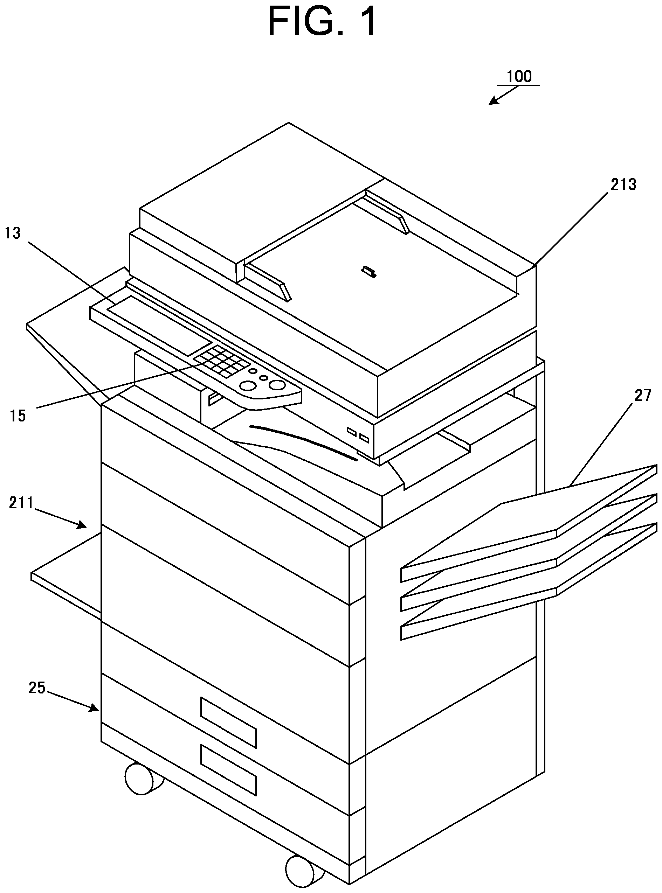

FIG. 1 is a diagram which illustrates an overall configuration of an image forming apparatus 100 on which a communication apparatus 103 according to a first embodiment is mounted. In the first embodiment, as an example of the image forming apparatus 100, a form of a multifunction peripheral will be described. However, the form of the image forming apparatus 100 is not particularly limited as long as the image forming apparatus 100 has a configuration in which the communication apparatus 103 according to the first embodiment is mounted. For example, the image forming apparatus 100 may be a printer, a copier, a fax device, or the like, whose function is limited to each type of the job function.

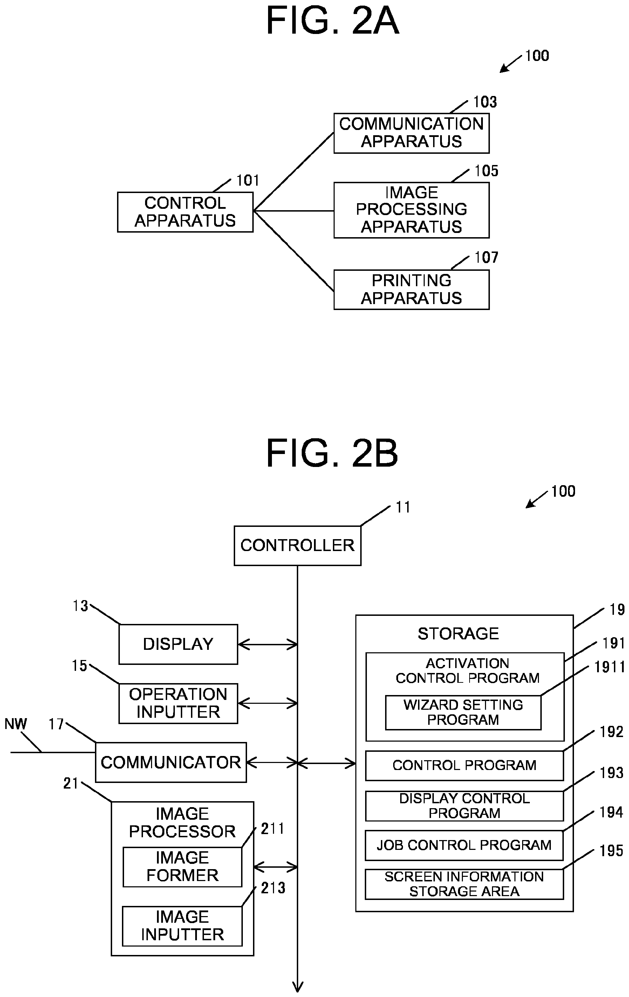

FIG. 2A is a diagram which illustrates a device configuration of the image forming apparatus 100. The image forming apparatus 100 includes a control apparatus 101, the communication apparatus 103, an image processing apparatus 105, and a printing apparatus 107. Each of the apparatuses indicated in FIG. 2A may be integrally formed or may be configured by combining a plurality of apparatuses. For example, the image processing apparatus 105 and the printing apparatus 107 may be composed as a single apparatus.

FIG. 2B is a diagram which illustrates a functional configuration of the image forming apparatus 100. It suffices that each of the apparatuses indicated in FIG. 2A has the function indicated in FIG. 2B as necessary.

As the functional configuration, the image forming apparatus 100 is provided with a controller 11, a display 13, an operation inputter 15, a communicator 17, a storage 19, and an image processor 21.

The controller 11 controls the image forming apparatus 100 as a whole. The controller 11 may be configured from, for example, one or more processing devices (such as a central processing unit (CPU) or a System on Chip (SoC)). The controller 11 reads and executes various programs stored in the storage 19, thereby implementing functions thereof.

The display 13 is a display device which displays various kinds of information to a user, for example. The display 13 may be configured from, for example, a liquid crystal display (LCD) or an organic electro-luminescence (EL) display. The display 13 displays, in addition to displaying a home screen (not illustrated) and an operation screen such as a setting screen related to execution of each job, a screen group including screens having identical screen attributes as an initial setting wizard.

The operation inputter 15 is an input device which receives input of information by the user, for example. The operation inputter 15 may be configured from, for example, various input devices such as operation keys including a hard key and a software key, and a button, etc. Note that the operation inputter 15 may also be configured as a touch panel on which inputs via the display 13 can be made. When the operation inputter 15 is configured as a touch panel, the operation inputter 15 can detect the user's touch, tap, swipe operation, and the like, on an object that is displayed via the display 13, and acquire coordinate information and pressure-sensitive information, etc., on the touch panel. In this case, examples of an input method of a touch panel that can be adopted include a general input method such as a resistive film method, an infrared method, an electromagnetic induction method, or a capacitive method.

The communicator 17 is provided with a wired and/or wireless interface for communicating with other terminal devices (not shown) via a network NW such as a local-area network (LAN), a wide area network (WAN), the Internet, a telephone line, or a fax line. Further, for example, the communicator 17 may be provided with an interface related to a wireless communication technique such as Bluetooth (registered trademark), Near Field Communication (NFC), Wi-Fi (registered trademark), ZigBee (registered trademark), Infrared Data Association (IrDA), or wireless Universal Serial Bus (USB).

The storage 19 is one or more storage devices that store therein various programs necessary for the operation of the image forming apparatus 100 and various kinds of data. The storage 19 may be configured from, for example, a storage device such as a random-access memory (RAM), a solid state drive (SSD), a hard disk drive (HDD), or a read-only memory (ROM).

In the first embodiment, the storage 19 stores an activation control program 191, a control program 192, a display control program 193, and a job control program 194, and reserves a screen information storage area 195.

The activation control program 191 is a program read by the controller 11 at the time of activating the image forming apparatus 100. The controller 11 that has read the activation control program 191 controls the activation processing of the image forming apparatus 100. The activation control program 191 as described above may be included in, for example, boot firmware or main firmware that is activated on the basis of verification by the boot firmware. In order to realize a secure boot, the activation control program 191 may be stored in a form in which another storage device (storage area) (not illustrated), which is different from the storage 19, stores the activation control program 191, or may be stored in a form in which another terminal device (not illustrated) on the network NW stores the activation control program 191.

The activation control program 191 includes a wizard setting program 1911. The controller 11 reads the wizard setting program 1911 when an activation timing of the image forming apparatus 100 corresponds to a timing at which initial setting is necessary to be made, such as when the image forming apparatus 100 is activated for the first time after the image forming apparatus 100 has been powered on (i.e., at the time of initial activation) or when activated for the first time after the storage 19 has been initialized.

The controller 11 which has read the wizard setting program 1911 sets a screen group to be described later or a screen that belongs to the screen group as an interface for the initial setting wizard in accordance with, for example, a preset deployment destination (place of destination) of the image forming apparatus 100. (In the present disclosure, a screen which functions as the initial setting wizard and via which the user can be assisted with the device setting or input of the device setting can be received is referred to as a wizard screen, and a set of wizard screens having identical screen attributes is referred to as a screen group).

The control program 192 is a program read by the controller 11 after activation of the apparatus based on the activation control program 191. The controller 11 that has read the control program 192 functions as an operating system (OS), and controls driving of the hardware such as the display 13, the operation inputter 15, the communicator 17, and the image processor 21. At this time, the controller 11 controls the driving of the image forming apparatus 100 on the basis of the initial setting (the device setting) received via the wizard screen.

The display control program 193 is a program read by the controller 11 in performing output control of an operation screen displayed by the display 13 or by the operation inputter 15 which is configured as a touch panel. The controller 11 that has read the display control program 193 controls the display of the wizard screen.

The job control program 194 is a program read by the controller 11 in executing a printing job related to printing or copying, or a job related to fax or image transmission. The controller 11 that has read the job control program 194 proceeds to a job mode (a print mode, a copy mode, a fax mode, or an image transmission mode, etc.) for executing each job, and executes the job. In executing a job, the controller 11 can display, on the touch panel, an operation screen for receiving a setting value or selection of a function that is necessary for executing the job from the user as necessary. The controller 11 can execute the job on the basis of the setting value or the function received via the operation screen.

The screen information storage area 195 is a storage area for storing screen information which constitutes the wizard screen and the operation screen for execution of the job. The controller 11 that has read the display control program 193 controls the display of the wizard screen and the operation screen on the basis of the screen information stored in the screen information storage area 195.

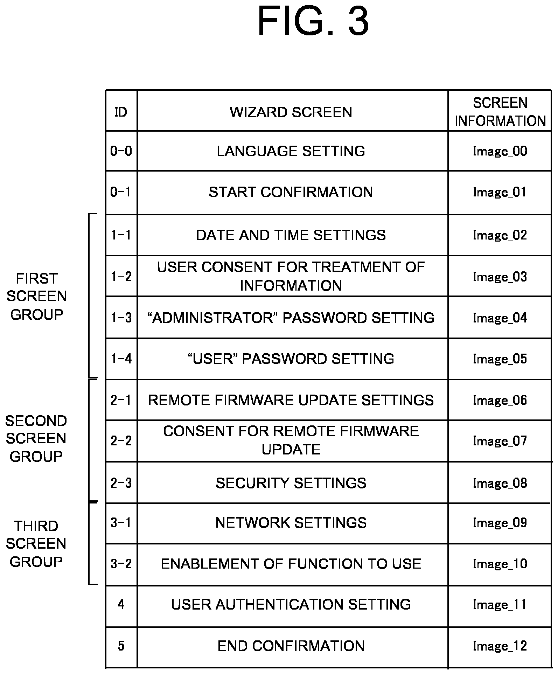

Here, the wizard screen according to the present disclosure will be described with reference to a table of FIG. 3.

In the present disclosure, wizard screens whose attributes (hereinafter referred to as screen attributes), such as the purpose, use, image size, and resolution, are common to each other are classified into one or more screen groups, and the user is prompted to make the necessary initial setting for each screen group. The number of classifications of the screen groups is not particularly limited, and the setting can be changed as appropriate according to the number of items that need to be set via the initial setting wizard. Further, although the order of display of displaying, to the user, the wizard screens that belong to the same screen group may be arbitrary, when the device settings received via the respective wizard screens have an in-context relationship, it is preferable that the wizard screens be displayed in a predetermined display order in accordance with the progress of the initial setting wizard.

The table indicated in FIG. 3 includes ID, a wizard screen, and screen information. The ID is an identifier for uniquely identifying the wizard screen. The wizard screen presents assistance that the wizard screen is to provide and a device setting, the input of which is to be received on the wizard screen. The screen information indicates screen information which constitutes the wizard screen. FIG. 3 exemplifies an initial setting wizard configured from thirteen wizard screens in total, which are respectively identified as ID "0" to ID "5".

Further, the initial setting wizard exemplified in FIG. 3 includes a first screen group to a third screen group which are each constituted of wizard screens whose screen attributes are common to each other. The first screen group belonging to ID "1" represents a group of wizard screens having a screen attribute which receives the essential device settings to accommodate various legal regulations. As the wizard screens belonging to the first screen group, "Date and Time Settings" of ID "1-1", "User Consent for Treatment of Information" of ID "1-2", "Administrator Password Setting" of ID "1-3", "User Password Setting" of ID "1-4", and the like, can be exemplified.

A second screen group belonging to ID "2" represents a group of wizard screens having a screen attribute which receives device settings that are recommended to accommodate various legal regulations. As the wizard screens belonging to the second screen group, "Remote Firmware Update Settings" of ID "2-1", "Consent for Remote Firmware Update" of ID "2-2", "Security Settings" of ID "2-3", and the like, can be exemplified. In other words, the wizard screens related to the maintenance of the apparatus state can be included in the second screen group.

The third screen group belonging to ID "3" represents a group of wizard screens having a screen attribute which receives one or more device settings necessary for the user to use the image forming apparatus 100 (the communication apparatus 103). As the wizard screens belonging to the third screen group, "Network Settings" of ID "3-1", "Enablement of Function to Use" of ID "3-2", and the like, can be exemplified.

Moreover, the initial setting wizard according to the present disclosure is constituted of, in addition to the first screen group to the third screen group as described above, "Language Setting" of ID "0-0", "Start Confirmation" of ID "0-1", "User Authentication Setting" of ID "4", and "End Confirmation" of ID "5", for example. Note that it is possible to further provide, in addition to the first screen group to the third screen group, a fourth screen group and screen groups thereafter by which more detailed device settings than those received on the wizard screens displayed by the first to third screen groups can be received.

The controller 11 that has read the activation control program 191 (the wizard setting program 1911) provides the user with the initial setting wizard via the wizard screens (screen groups) exemplified in FIG. 3.

Referring back to FIG. 2, the image processor 21 includes an image former 211 and an image inputter 213. The image former 211 feeds paper from a paper feeder 25, forms an image based on image data on the paper, and thereafter discharges the paper to a paper discharger 27. The image former 211 may be configured from, for example, a laser printer employing an electrophotographic method. In this case, the image former 211 forms images by using toners supplied from toner cartridges (not illustrated) corresponding to toner colors (e.g., cyan, magenta, yellow, and black).

The image inputter 213 generates image data by scanning a document. The image inputter 213 may be configured as a scanner device including, in addition to an image sensor such as a charge-coupled device (CCD) or a contact image sensor (CIS), an automatic document feeder (ADF) and a flatbed for placing a document thereon and reading the document, and the like. A configuration of the image inputter 213 is not particularly limited as long as the configuration allows the image inputter 213 to read a reflected light image from a document image with the image sensor. Note that the image inputter 213 may also be configured as an interface capable of acquiring, for example, image data stored in a storage medium such as a USB memory or image data transmitted from a terminal device (not illustrated). Further, the image processor 21 may take the form of performing, for example, shading compensation and density correction on the image data that has been input from the image inputter 213, and generating image data for image transmission.

The above-described functions may be provided in a duplicated manner when the control apparatus 101, the communication apparatus 103, the image processing apparatus 105, and the printing apparatus 107 individually implement those functions. For example, each of the communication apparatus 103, the image processing apparatus 105, and the printing apparatus 107 may include the controller 11 and the storage 19. Alternatively, the respective apparatuses may share and use the controller 11, the storage 19, and the like.

### 1.2 Flow of Processing

The image forming apparatus 100 according to the present disclosure is configured to display a wizard screen on the display 13 (the operation inputter 15) when the image forming apparatus 100 is powered on in a factory shipment state, and to prohibit the other operations from being performed until the initial setting wizard is finished. Such a configuration is adopted in order to prohibit the use of the function of the image forming apparatus 100 until the essential settings required by the legal regulations are completed.

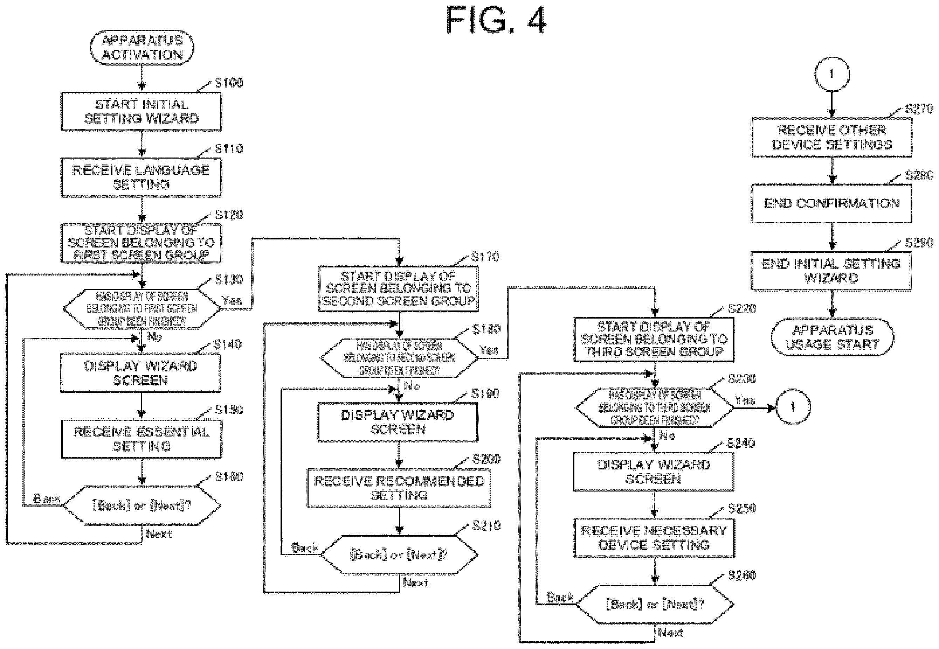

An example of processing related to the initial setting wizard as described above will be described with reference to a flowchart of FIG. 4. The flowchart illustrated in FIG. 4 is the processing executed as the controller 11 reads the activation control program 191 (the wizard setting program 1911), the control program 192, the display control program 193, and the like.

After the image forming apparatus 100 has been activated, the controller 11 reads the activation control program 191 (the wizard setting program 1911), thereby starting the initial setting wizard (step S100).

The controller 11 receives the language setting made by the user via the "Language Setting" wizard screen of ID "0-0" (step S110). This is performed to receive selection of the language that can be understood by the user who executes the initial setting wizard.

The controller 11 starts the display of a wizard screen belonging to the first screen group that is based on the received language (step S120).

Next, the controller 11 determines whether or not the display of a screen belonging to the first screen group has been finished (step S130). If it is determined that the display of the screen belonging to the first screen group has not been finished, the controller 11 displays a wizard screen (step S130; No → step S140). In this case, the controller 11 can set the wizard screen to be displayed by specifying the ID or image information of the wizard screen.

Then, the controller 11 receives the essential device settings, which are needed to accommodate various legal regulations, made by the user (step S150). The controller 11 stores the received device settings in the storage 19.

The controller 11 determines whether the user has selected a selection button of either a [Back] button or a [Next] button (step S160). Here, if it is determined that the [Back] button has been selected, the controller 11 returns the processing to step S140 (step S160; [Back] → step S140).

Meanwhile, if it is determined that the [Next] button has been selected by the user, the controller 11 returns the processing to step S130 (step S160; [Next] → step S130).

When the processing returns to step S130, the controller 11 determines whether or not the display of the screen belonging to the first screen group has been finished. If it is determined that the display of the screen belonging to the first screen group has not been finished, the controller 11 displays a wizard screen pertaining to the next ID (step S140), and repeats the processing from step S150 to step S160.

In step S130, if it is determined that the display of the screen belonging to the first screen group has been finished, the controller 11 starts the display of a wizard screen belonging to the second screen group (step S130; Yes → step S170).

Next, the controller 11 determines whether or not the display of a screen belonging to the second screen group has been finished (step S180). If it is determined that the display of the screen belonging to the second screen group has not been finished, the controller 11 displays a wizard screen (step S180; No → step S 190). In this case, the controller 11 can set the wizard screen to be displayed by specifying the ID or image information of the wizard screen.

Then, the controller 11 receives device settings, which are recommended to accommodate various legal regulations, made by the user (step S200). The controller 11 stores the received device settings in the storage 19.

The controller 11 determines whether the user has selected a selection button of either the [Back] button or the [Next] button (step S210). Here, if it is determined that the [Back] button has been selected, the controller 11 returns the processing to step S 190 (step S210; [Back] → step S190).

Meanwhile, if it is determined that the [Next] button has been selected by the user, the controller 11 returns the processing to step S 180 (step S210; [Next] → step S 180).

When the processing returns to step S 180, the controller 11 determines whether or not the display of the screen belonging to the second screen group has been finished. If it is determined that the display of the screen belonging to the second screen group has not been finished, the controller 11 displays a wizard screen pertaining to the next ID (step S190), and repeats the processing from step S200 to step S210.

In step S 180, if it is determined that the display of the screen belonging to the second screen group has been finished, the controller 11 starts the display of a wizard screen belonging to the third screen group (step S180; Yes → step S220).

Next, the controller 11 determines whether or not a display of a screen belonging to the third screen group has been finished (step S230). If it is determined that the display of the screen belonging to the third screen group has not been finished, the controller 11 displays a wizard screen (step S230; No → step S240). In this case, the controller 11 can set the wizard screen to be displayed by specifying the ID or image information of the wizard screen.

Then, the controller 11 receives one or more device settings necessary for the user to use the image forming apparatus 100 (the communication apparatus 103) (step S250). The controller 11 stores the received device settings in the storage 19.

The controller 11 determines whether the user has selected a selection button of either the [Back] button or the [Next] button (step S260). Here, if it is determined that the [Back] button has been selected, the controller 11 returns the processing to step S240 (step S260; [Back] → step S240).

Meanwhile, if it is determined that the [Next] button has been selected by the user, the controller 11 returns the processing to step S230 (step S260; [Next] → step S230).

When the processing returns to step S230, the controller 11 determines whether or not the display of the screen belonging to the third screen group has been finished. If it is determined that the display of the screen belonging to the third screen group has not been finished, the controller 11 displays a wizard screen pertaining to the next ID (step S240), and repeats the processing from step S250 to step S260.

In step S230, if it is determined that the display of the screen belonging to the third screen group has been finished, the controller 11 receives the other device settings such as the user authentication setting via the "User Authentication Setting" wizard screen of ID "4" (step S230; Yes → step S270). In a case where a screen group other than the first screen group to the third screen group (for example, a fourth screen group, a fifth screen group, ... an nth screen group) is provided, processing may be performed in accordance with the processing related to step S130 to step S260. Further, it is also possible to adopt a mode in which one of the second screen group and the third screen group is displayed after display of the first screen group.

Next, the controller 11 makes an end confirmation via the "End Confirmation" wizard screen of ID "5", and ends the initial setting wizard (step S280 → step S290). After the initial setting wizard has been ended, use of the apparatus is started. Referring to FIG. 4, a mode of displaying, after displaying the first screen group, both the second screen group and the third screen group has been described. However, it is also possible to adopt a mode in which one of the second screen group and the third screen group is displayed after displaying the first screen group.

### 1.3 Operation Examples

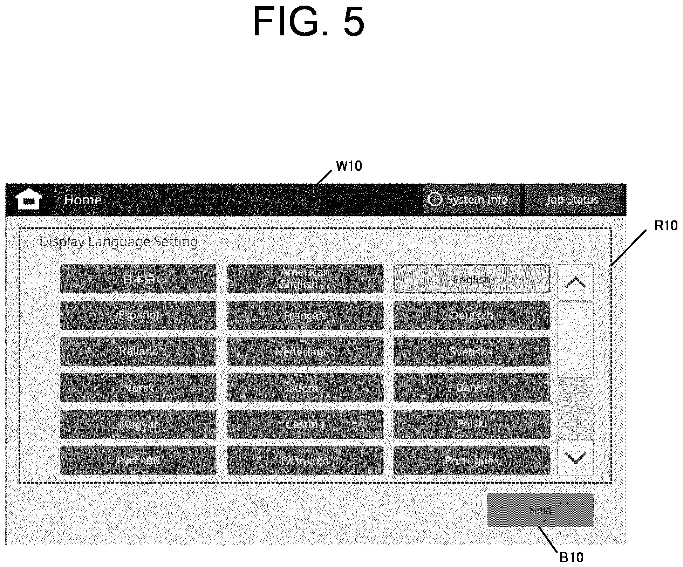

Next, operation examples according to the first embodiment will be described. In the following description, it is assumed that the same configurations are denoted by the same reference numerals. FIG. 5 is a diagram which illustrates a configuration example of the "Language Setting" wizard screen (screen information "Image_00") of ID "0-0". A "Language Setting" wizard screen W10 of ID "0-0 represents a wizard screen that the controller 11 displays in step S110 of FIG. 4. The wizard screen W10 includes a language preference area R10 and a Next button B 10. The language preference area R10 is a selection area for receiving a language preference of the user. When a desired language is selected by the user, the selected language is identifiably displayed (for example, highlighted), and the user can recognize the selected language. The Next button B 10 is a selection button for receiving an instruction to definitively confirm the language selection made by the user. When an instruction to select the Next button B 10 is received from the user, the controller 11 transitions the screen to a wizard screen of the subsequent figure.

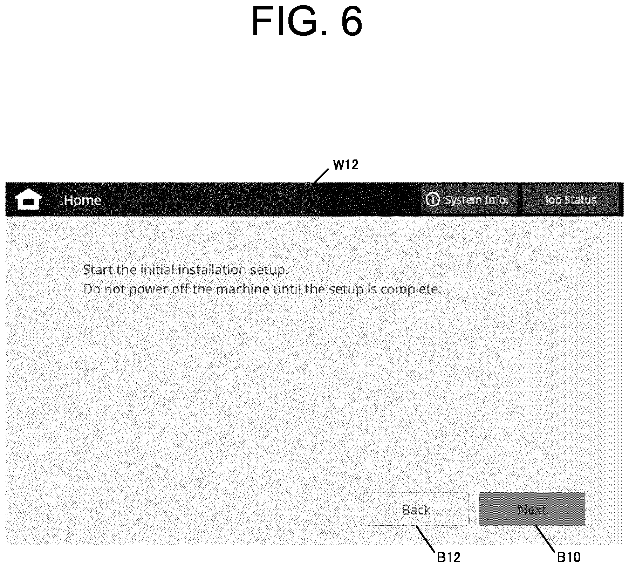

FIG. 6 is a diagram which illustrates a configuration example of the "Start Confirmation" wizard screen (screen information "Image_01") of ID "0-1". A "Start Confirmation" wizard screen W12 of ID "0-1" represents a wizard screen that the controller 11 displays in step S120 of FIG. 4. The wizard screen W12 includes a message indicating that an initial setting wizard via the wizard screen is to be started, the Next button B10, and a Back button B12. The user who has confirmed the message indicating that the initial setting wizard is to be started selects a selection button of either the Next button B 10 or the Back button B12.

The Next button B 10 is a selection button for receiving an instruction to confirm the start of the initial setting wizard from the user. When an instruction to select the Next button B10 is received from the user, the controller 11 transitions the screen to a wizard screen of the subsequent figure. The Back button B12 is a selection button for receiving an instruction to cancel the initial setting wizard from the user. When an instruction to select the Back button B12 is received from the user, the controller 11 transitions the screen to the wizard screen of the previous figure.

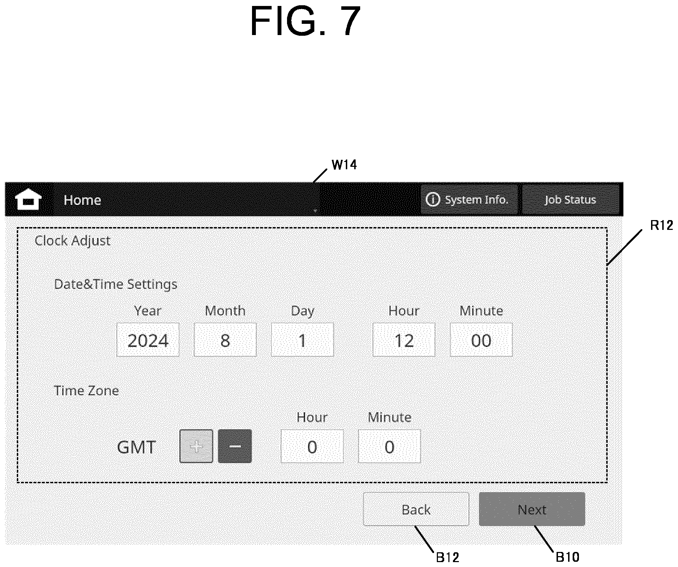

FIG. 7 is a diagram which illustrates a configuration example of the "Date and Time Settings" wizard screen (screen information "Image_02") of ID "1-1". A "Date and Time Settings" wizard screen W14 of ID "1-1" represents a wizard screen belonging to the first screen group that is displayed by the controller 11 in step S140 of FIG. 4. The wizard screen W14 includes a date and time setting area R12, the Next button B 10, and the Back button B 12. The date and time setting area R12 is a setting area for receiving the date and time setting by the user.

The Next button B 10 is a selection button for receiving an instruction to definitively confirm the date and time setting made by the user. When an instruction to select the Next button B10 is received from the user, the controller 11 transitions the screen to a wizard screen of the subsequent figure. The Back button B12 is a selection button for receiving an instruction to cancel the date and time setting made by the user. When an instruction to select the Back button B 12 is received from the user, the controller 11 transitions the screen to the wizard screen of the previous figure.

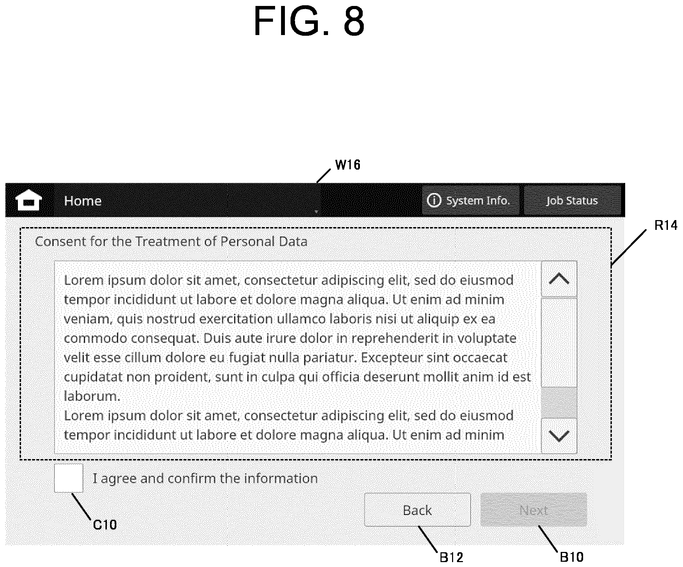

FIG. 8 is a diagram which illustrates a configuration example of the "User Consent for Treatment of Information" wizard screen (screen information "Image_03") of ID "1-2". A "User Consent for Treatment of Information" wizard screen W16 of ID "1-2" represents a wizard screen belonging to the first screen group that is displayed by the controller 11 in step S140 of FIG. 4. The wizard screen W16 includes a consent display area R14, a consent checkbox C10, the Next button B10, and the Back button B 12. The consent display area R14 is a display area for displaying the consent contents regarding the treatment of information of the user.

The consent checkbox C10 is a checkbox for receiving a confirmation instruction from the user who consents to the treatment of information indicated in the consent display area R14. When the consent checkbox C10 is checked, the Next button B 10 becomes active, and the Next button B10 can be selected.

The Next button B 10 is a selection button for receiving an instruction to definitively confirm the consent checkbox C10 from the user. When an instruction to select the Next button B10 is received from the user, the controller 11 transitions the screen to a wizard screen of the subsequent figure. The Back button B 12 is a selection button for receiving a cancellation instruction for the treatment of information of the user. When an instruction to select the Back button B 12 is received from the user, the controller 11 transitions the screen to the wizard screen of the previous figure.

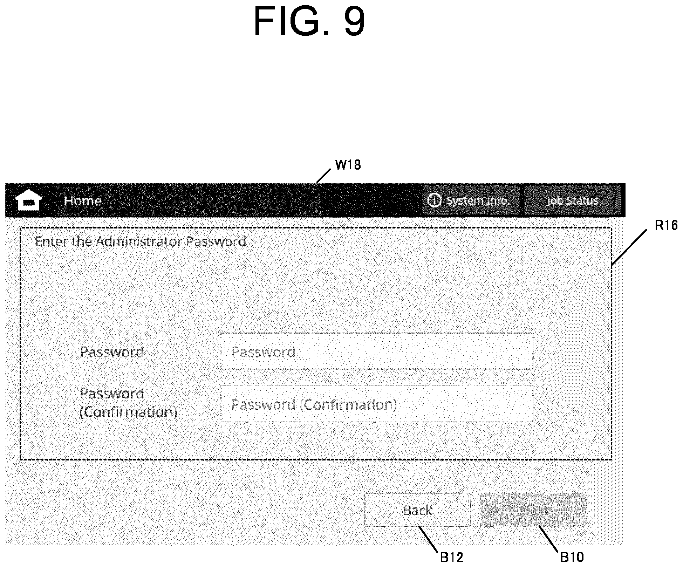

FIG. 9 is a diagram which illustrates a configuration example of the "Administrator Password Setting" wizard screen (screen information "Image_04") of ID "1-3". An "Administrator Password Setting" wizard screen W18 of ID "1-3" represents a wizard screen belonging to the first screen group that is displayed by the controller 11 in step S140 of FIG. 4. The wizard screen W18 includes an administrator password setting area R16, the Next button B 10, and the Back button B12. The administrator password setting area R16 is a setting area for receiving the setting of an administrator password by the user.

When a desired password is set in the administrator password setting area R16 by the user, the Next button B10 becomes active, and the Next button B10 can be selected.

The Next button B10 is a selection button for receiving an instruction to definitively confirm the administrator password setting made by the user. When an instruction to select the Next button B 10 is received from the user, the controller 11 transitions the screen to a wizard screen of the subsequent figure. The Back button B 12 is a selection button for receiving a cancellation instruction for the administrator password setting made by the user. When an instruction to select the Back button B12 is received from the user, the controller 11 transitions the screen to the wizard screen of the previous figure.

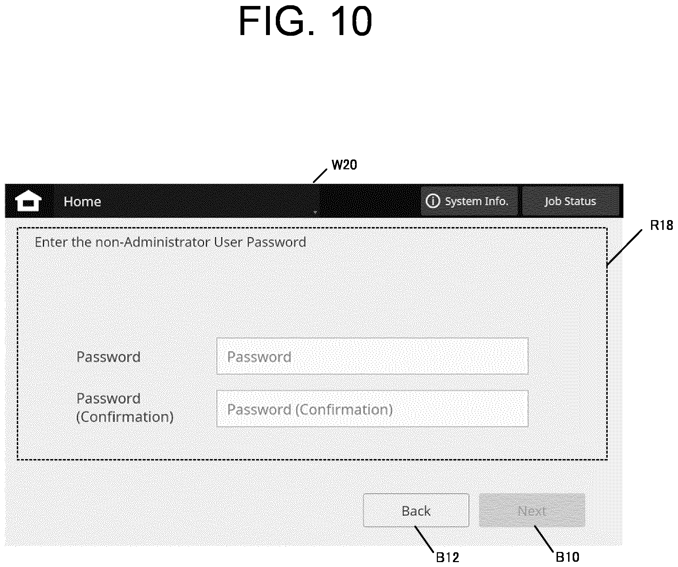

FIG. 10 is a diagram which illustrates a configuration example of the "User Password Setting" wizard screen (screen information "Image_05") of ID "1-4". A "User Password Setting" wizard screen W20 of ID "1-4" represents a wizard screen belonging to the first screen group that is displayed by the controller 11 in step S140 of FIG. 4. The wizard screen W20 includes a user password setting area R18, the Next button B10, and the Back button B12. The user password setting area R18 is a setting area for receiving the setting of a user password by the user.

When a desired password is set in the user password setting area R18 by the user, the Next button B10 becomes active, and the Next button B 10 can be selected.

The Next button B 10 is a selection button for receiving an instruction to definitively confirm the user password setting made by the user. When an instruction to select the Next button B10 is received from the user, the controller 11 transitions the screen to a wizard screen of the subsequent figure. The Back button B 12 is a selection button for receiving a cancellation instruction for the user password setting made by the user. When an instruction to select the Back button B12 is received from the user, the controller 11 transitions the screen to the wizard screen of the previous figure.

As for the wizard screen W14 related to FIG. 7 and the wizard screen W16 related to FIG. 8, it is preferable that the "Date and Time Settings" wizard screen W14 should be displayed prior to the "User Consent for Treatment of Information" wizard screen W16 in order to definitively confirm the date and time of obtainment of the consent for the treatment of information. Further, in order to handle restriction on use of a default password and the previously used password, it is preferable that the wizard screen for receiving authentication information, such as the "Administrator Password Setting" wizard screen W18 related to FIG. 9 and the "User Password Setting" wizard screen W20 related to FIG. 10, should be treated as the wizard screen belonging to the first screen group.

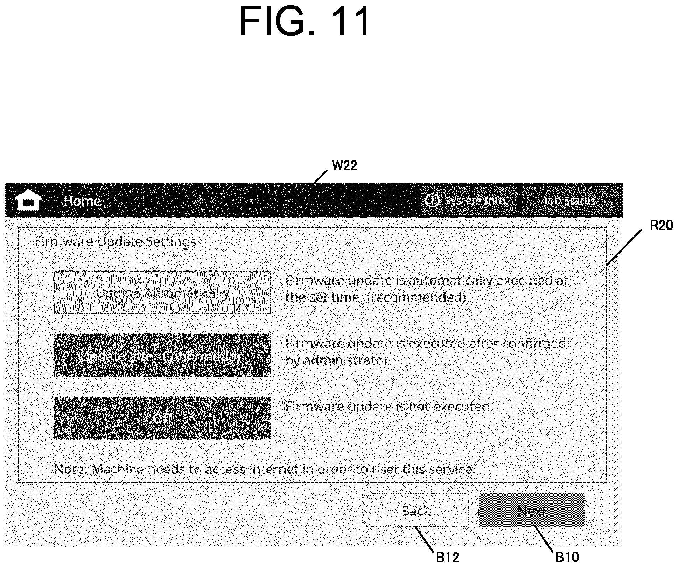

FIG. 11 is a diagram which illustrates a configuration example of the "Remote Firmware Update Settings" wizard screen (screen information "Image_06") of ID "2-1". A "Remote Firmware Update Settings" wizard screen W22 of ID "2-1" is a wizard screen belonging to the second screen group that is displayed by the controller 11 in step S190 of FIG. 4. The wizard screen W22 includes a remote firmware setting area R20, the Next button B10, and the Back button B12. The remote firmware setting area R20 is a setting area for receiving the setting of remote firmware by the user. When a desired remote firmware setting is selected by the user, the selected remote firmware setting is identifiably displayed (for example, highlighted), and the user can recognize the selected remote firmware setting. In a case where the setting of remote firmware update has been completed by, for example, a dealer, before an image forming apparatus is delivered to the user, the image forming apparatus may be controlled such that the "Remote Firmware Update Settings" screen is not included in the setting screen of the initial setting wizard to be executed at the time of delivery to the user.

The Next button B 10 is a selection button for receiving an instruction to definitively confirm the remote firmware setting that has been selected by the user. When an instruction to select the Next button B10 is received from the user, the controller 11 transitions the screen to a wizard screen of the subsequent figure. The Back button B12 is a selection button for receiving a cancellation instruction for the remote firmware setting made by the user. When an instruction to select the Back button B12 is received from the user, the controller 11 transitions the screen to the wizard screen of the previous figure.

Although the "Consent for Remote Firmware Update" wizard screen (screen information "Image_07") of ID "2-2" is not illustrated, the wizard screen may be configured to display the consent contents regarding the remote firmware update in the consent display area R14, for example, likewise the "User Consent for Treatment of Information" wizard screen (screen information "Image_03") of ID "1-2" exemplified in FIG. 8.

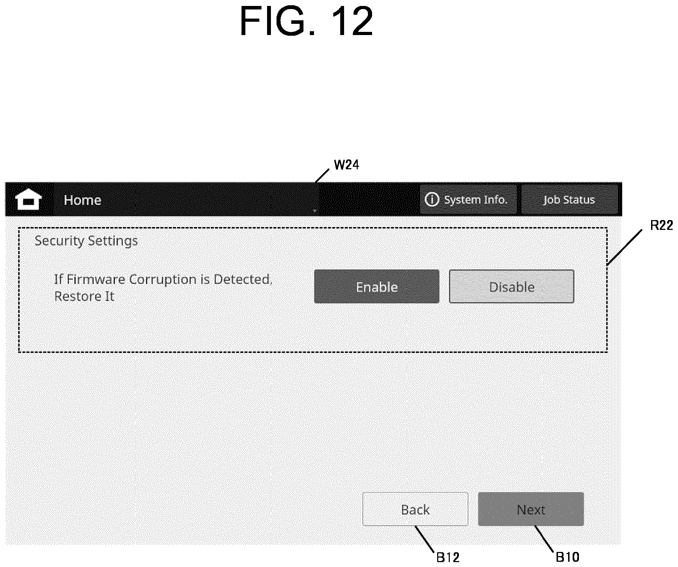

FIG. 12 is a diagram which illustrates a configuration example of the "Security Settings" wizard screen (screen information "Image_08") of ID "2-3". A "Security Settings" wizard screen W24 of ID "2-3" represents a wizard screen belonging to the second screen group that is displayed by the controller 11 in step S190 of FIG. 4. The wizard screen W24 includes a security setting area R22, the Next button B10, and the Back button B12. The security setting area R22 is a setting area for receiving the setting of security by the user. When a desired security setting is selected by the user, the selected security setting is identifiably displayed (for example, highlighted), and the user can recognize the selected security setting.

The Next button B 10 is a selection button for receiving an instruction to definitively confirm the security setting selected by the user. When an instruction to select the Next button B 10 is received from the user, the controller 11 transitions the screen to a wizard screen of the subsequent figure. The Back button B 12 is a selection button for receiving a cancellation instruction for the security setting made by the user. When an instruction to select the Back button B 12 is received from the user, the controller 11 transitions the screen to the wizard screen of the previous figure.

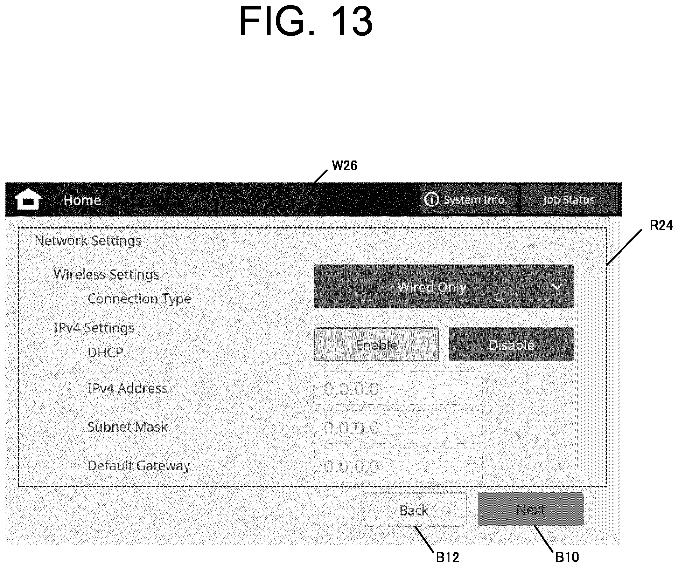

FIG. 13 is a diagram which illustrates a configuration example of the "Network Settings" wizard screen (screen information "Image_09") of ID "3-1". A "Network Settings" wizard screen W26 of ID "3-1" represents a wizard screen belonging to the third screen group that is displayed by the controller 11 in step S240 of FIG. 4. The wizard screen W26 includes a network setting area R24, the Next button B 10, and the Back button B 12. The network setting area R24 is a setting area for receiving the setting of a network to be made by the user. When desired network settings are selected and set by the user, the selected and set network settings are identifiably displayed (for example, highlighted), and the user can recognize the selected and set network settings.

The Next button B 10 is a selection button for receiving an instruction to definitively confirm the network settings selected and set by the user. When an instruction to select the Next button B 10 is received from the user, the controller 11 transitions the screen to a wizard screen of the subsequent figure. The Back button B12 is a selection button for receiving a cancellation instruction for the network settings made by the user. When an instruction to select the Back button B 12 is received from the user, the controller 11 transitions the screen to the wizard screen of the previous figure.

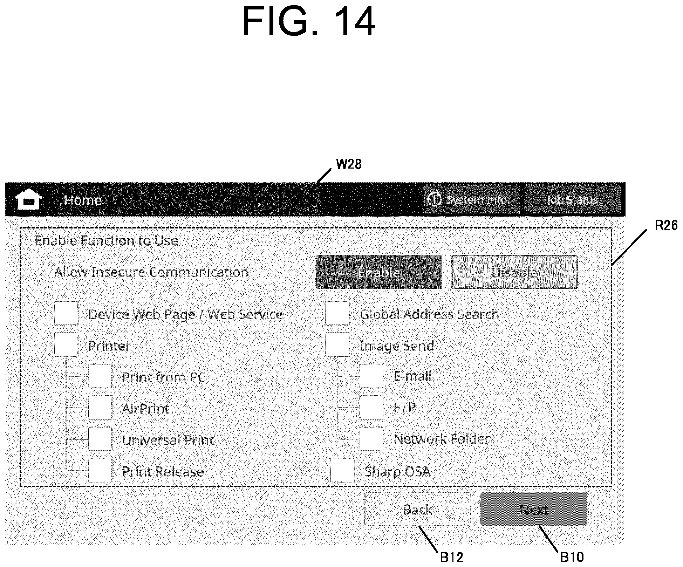

FIG. 14 is a diagram which illustrates a configuration example of the "Enablement of Function to Use" wizard screen (screen information "Image_10") of ID "3-2". An "Enablement of Function to Use" wizard screen W28 of ID "3-2" represents a wizard screen belonging to the third screen group that is displayed by the controller 11 in step S240 of FIG. 4. The wizard screen W28 includes an enablement setting area R26, the Next button B 10, and the Back button B 12. The enablement setting area R26 is a setting area for receiving the enablement setting of the function to use by the user. When a desired function to use is selected and set by the user, the selected and set function to use is identifiably displayed (for example, highlighted), and the user can recognize the selected and set function to use.

The Next button B 10 is a selection button for receiving an instruction to definitively confirm the enablement of the function to use that has been selected and set by the user. When an instruction to select the Next button B10 is received from the user, the controller 11 transitions the screen to a wizard screen of the subsequent figure. The Back button B12 is a selection button for receiving a cancellation instruction for the enablement of the function to use by the user. When an instruction to select the Back button B 12 is received from the user, the controller 11 transitions the screen to the wizard screen of the previous figure.

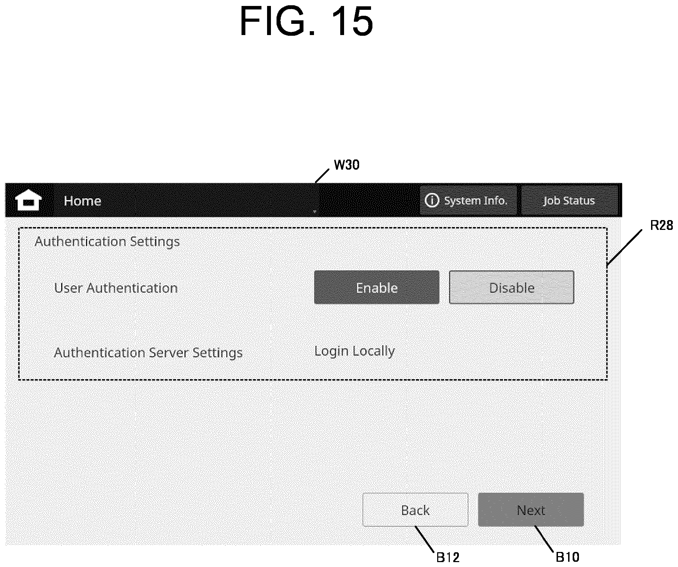

FIG. 15 is a diagram which illustrates a configuration example of the "User Authentication Setting" wizard screen (screen information "Image_11") of ID "4". A "User Authentication Setting" wizard screen W30 of ID "4" is a wizard screen belonging to the other device settings displayed by the controller 11 in step S270 of FIG. 4. The wizard screen W30 includes a user authentication setting area R28, the Next button B 10, and the Back button B 12. The user authentication setting area R28 is a setting area for receiving the user authentication setting. When a desired user authentication setting is selected by the user, the selected user authentication setting is identifiably displayed (for example, highlighted), and the user can recognize the selected user authentication setting.

The Next button B10 is a selection button for receiving an instruction to definitively confirm the user authentication setting selected by the user. When an instruction to select the Next button B 10 is received from the user, the controller 11 transitions the screen to a wizard screen of the subsequent figure. The Back button B12 is a selection button for receiving a cancellation instruction for the user authentication setting made by the user. When an instruction to select the Back button B 12 is received from the user, the controller 11 transitions the screen to the wizard screen of the previous figure.

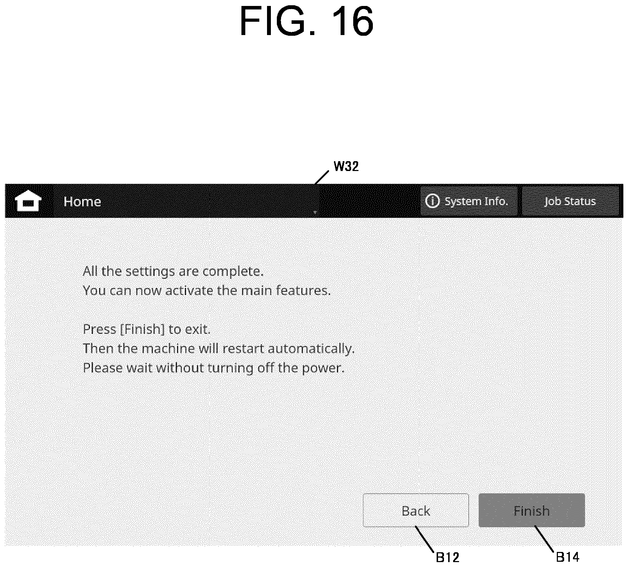

FIG. 16 is a diagram which illustrates a configuration example of the "End Confirmation" wizard screen (screen information "Image_12") of ID "5". An "End Confirmation" wizard screen W32 of ID "5" is a wizard screen related to an end confirmation displayed by the controller 11 in step S280 of FIG. 4. The wizard screen W32 includes a message indicating that the initial setting wizard is to be ended, a Finish button B 14, and the Back button B 12. The user who has confirmed the message indicating that the initial setting wizard is to be ended selects a selection button of either the Finish button B 14 or the Back button B12.

The Finish button B 14 is a selection button for receiving an instruction to confirm the end of the initial setting wizard from the user. When an instruction to select the Finish button B 14 is received from the user, the controller 11 ends the initial setting wizard. The Back button B 12 is a selection button for receiving an instruction to cancel end of the initial setting wizard from the user. When an instruction to select the Back button B 12 is received from the user, the controller 11 transitions the screen to the wizard screen of the previous figure.

As described above, according to the first embodiment, a screen group including wizard screens having identical screen attributes can be displayed as an initial setting wizard. The screen group includes at least a first screen group having a screen attribute which receives the essential device setting to accommodate various legal regulations, a second screen group having a screen attribute which receives a device setting that is recommended to accommodate the various legal regulations, and a third screen group having a screen attribute which receives one or more device settings necessary for the user to use the communication apparatus. Therefore, the user can simply make the device settings via the initial setting wizard, and also easily respond to taking measures required to comply with the legal regulations.

### 2 Second Embodiment

A second embodiment corresponds to a mode in which a configuration of a screen group (wizard screens) to be applied to an initial setting wizard is changed according to a place of destination of the image forming apparatus 100 in the first embodiment.

Since the functional configuration of an image forming apparatus 100 (a communication apparatus 103) according to the second embodiment can be made the same as that of the image forming apparatus 100 according to the first embodiment, description thereof will be omitted.

### 2.1 Flow of Processing

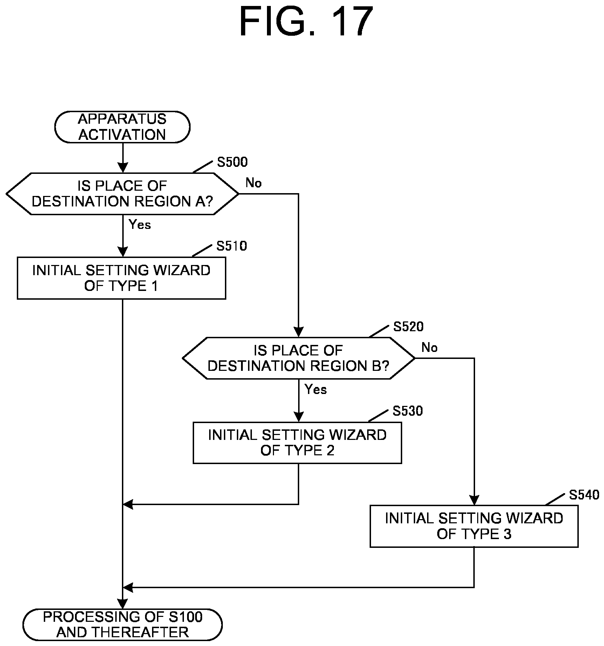

A flow of processing according to the second embodiment is that obtained by adding processing which will be described with reference to FIG. 17 before step S100 in the flow of the processing according to the first embodiment that has been described with reference to FIG. 4. Therefore, parts described with reference to FIG. 4 will be omitted from the description. Here, as the place of destination of the image forming apparatus 100, three regions, which are region A (Europe, for example), region B (North America, for example), and region C (Asia including Japan, for example), will be described in accordance with the legal regulations that are applicable. However, the place of destination is not limited to the above.

In FIG. 17, after the image forming apparatus 100 has been activated, a controller 11 determines whether a place of destination of the image forming apparatus 100 corresponds to region A (step S500). If it is determined that the place of destination of the image forming apparatus 100 corresponds to region A, the controller 11 determines that an initial setting wizard thereof is the initial setting wizard of type 1 (step S500; Yes → step S510).

Meanwhile, if it is determined that the place of destination of the image forming apparatus 100 does not correspond to region A, the controller 11 determines whether the place of destination of the image forming apparatus 100 corresponds to region B (step S500; No → step S520). If it is determined that the place of destination of the image forming apparatus 100 corresponds to region B, the controller 11 determines that the initial setting wizard thereof is the initial setting wizard of type 2 (step S520; Yes → step S530).

Meanwhile, if it is determined that the place of destination of the image forming apparatus 100 does not correspond to region B, the controller 11 determines that the initial setting wizard thereof is the initial setting wizard of type 3 (step S520; No → step S540).

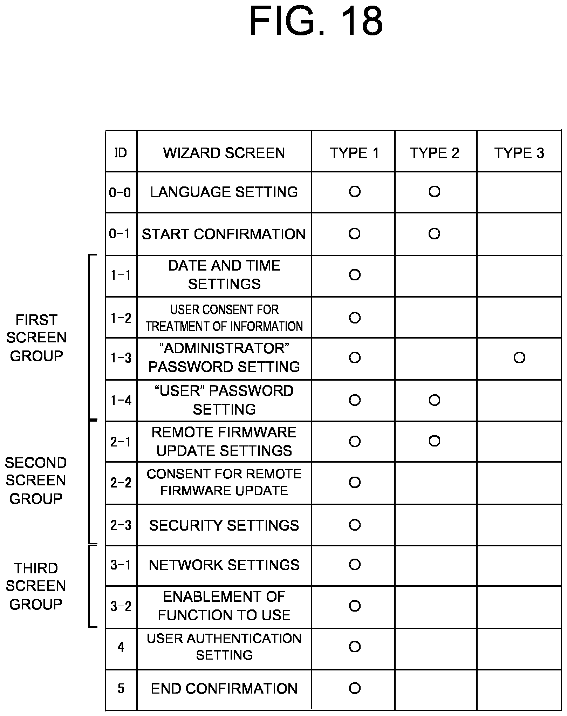

FIG. 18 is a table illustrating the types of initial setting wizard determined in FIG. 17. Note that the screen groups (the wizard screens) classified by each type described in the table of FIG. 18 are merely examples, and the types of the initial setting wizard according to the second embodiment are not limited to the examples indicated in FIG. 18.

The initial setting wizard according to type 1 exemplified in FIG. 18, that is, the initial setting wizard of the image forming apparatus 100 whose place of destination corresponds to region A includes all of the screen groups (wizard screens) described in the first embodiment.

Further, the initial setting wizard of the image forming apparatus 100 whose place of destination corresponds to region B includes the "Language Setting" wizard screen of ID "0-0", the "Start Confirmation" wizard screen of ID "0-1", the "User Password Setting" wizard screen of ID "1-4", and the "Remote Firmware Update Settings" wizard screen of ID "2-1".

Further, the initial setting wizard of the image forming apparatus 100 whose place of destination corresponds to region C includes the "Administrator Password Setting" wizard screen of ID "1-3".

As described above, according to the second embodiment, the configuration of the screen group (the wizard screens) included in the initial setting wizard can be changed in accordance with the place of destination of the image forming apparatus 100. Therefore, not only can the effects and advantages according to the first embodiment be obtained, but more flexible apparatus operation can be conducted in the second embodiment.

The present disclosure is not limited to the above-described embodiments, and various modifications can be made. That is, the technical scope of the present disclosure also includes embodiments that may be obtained by combining technical measures modified as appropriate without departing from the gist of the present disclosure.

Further, although some parts of the above-described embodiments are described separately for convenience of explanation, it is needless to say that the embodiments may be combined and implemented within a technically possible range. For example, the first embodiment described above exemplifies that, as the initial setting wizard, the first embodiment includes at least a first screen group having a screen attribute which receives the essential device setting to accommodate various legal regulations, a second screen group having a screen attribute which receives a device setting that is recommended to accommodate the various legal regulations, and a third screen group having a screen attribute which receives one or more device settings necessary for the user to use the communication apparatus. However, the initial setting wizard may include only the first screen group having the screen attribute which receives the essential device setting to accommodate the various legal regulations. Alternatively, the initial setting wizard may include the first screen group having the screen attribute which receives the essential device setting to accommodate the various legal regulations and the second screen group having the screen attribute which receives the device setting that is recommended to accommodate the various legal regulations, or include the first screen group having the screen attribute which receives the essential device setting to accommodate the various legal regulations and the third screen group having the screen attribute which receives one or more device settings necessary for the user to use the communication apparatus.

In addition, the program to be operated on each apparatus in the embodiments is a program that controls a CPU or the like (i.e., a program that causes a computer to function) so as to implement the functions of the above-described embodiments. Further, information that is handled by these apparatuses is temporarily accumulated in a temporary storage device (for example, a RAM) during processing of the information, is then stored in various storage devices such as a ROM and an HDD, and is then read, corrected, and written by the CPU as needed.

Here, a non-transitory computer-readable recording medium in which a program of an information processing apparatus is recorded may be, for example, any of a semiconductor medium (for example, a ROM or a non-volatile memory card), an optical recording medium/magneto-optical recording medium (for example, a digital versatile disc (DVD), a magneto optical disc (MO), a Mini Disc (MD), a compact disc (CD), or a Blu-ray (registered trademark) Disc (BD)), and a magnetic recording medium (for example, a magnetic tape or a flexible disk), or the like. In this case, not only are the functions of the above-described embodiments implemented through the program recorded in the recording medium being read by a computer of the information processing apparatus and executed by the computer, but the functions of the present disclosure may also be implemented through processing performed in cooperation with, for example, an operating system or other application programs based on instructions of the program.

Furthermore, in the case of distributing the programs to the market, the programs may be stored in a portable recording medium for distribution or transferred to a server computer connected via a network such as the Internet. In this case, it is needless to say that a storage device of the server computer is also included in the present disclosure.

In addition, each functional block or various features of the apparatus used in the above-described embodiments can also be implemented or executed by an electric circuit, such as an integrated circuit or a plurality of integrated circuits. The electrical circuit that is designed to implement the functions described in the present specification may include a general-purpose processor, a digital signal processor (DSP), an application-specific integrated circuit (ASIC), a field programmable gate array (FPGA) or other programmable logic devices, a discrete gate or transistor logic, a discrete hardware component, or any combination thereof. The general-purpose processor may be a microprocessor or may be a conventional processor, a controller, a microcontroller, or a state machine. The above-described electric circuit may be configured by a digital circuit or by an analog circuit. Further, in a case where an integrated circuit technology that replaces the current integrated circuits emerges as a result of the progress of the semiconductor technology, one or more aspects of the present disclosure may also use new integrated circuits based on such technology.

### REFERENCE SIGNS LIST

11 Controller
13 Display
15 Operation inputter
17 Communicator
19 Storage
191 Activation control program
192 Control program
193 Display control program
194 Job control program
195 Screen information storage area
21 Image processor
211 Image former
213 Image inputter
100 Image forming apparatus
101 Control apparatus
103 Communication apparatus
105 Image processing apparatus
107 Printing apparatus

## Claims

1. A screen display method of a communication apparatus (100, 103), the screen display method comprising:
displaying a screen group including screens having identical screen attributes as an initial setting wizard executed at a time of initial activation,
wherein the screen group includes
at least a first screen group (W14, W16, W18, W20) having a screen attribute which receives an essential device setting to accommodate various legal regulations, a second screen group (W22, W24) having a screen attribute which receives a device setting that is recommended to accommodate the various legal regulations, and a third screen group (W26, W28) having a screen attribute which receives one or more device settings necessary for a user to use the communication apparatus.

2. The screen display method of the communication apparatus (100, 103) according to claim 1, wherein
the screens belonging to the first screen group (W14, W16, W18, W20) are displayed in a predetermined display order in accordance with progress of the initial setting wizard.

3. The screen display method of the communication apparatus (100, 103) according to claim 2, wherein
the screens belonging to the first screen group (W14, W16, W18, W20) are displayed in a display order of a screen related to date and time settings, a screen related to reception of consent from the user, and a screen related to reception of input of authentication information.

4. The screen display method of the communication apparatus (100, 103) according to claim 1, wherein
the second screen group (W22, W24) includes at least a screen related to maintenance of an apparatus state of the communication apparatus.

5. The screen display method of the communication apparatus (100, 103) according to claim 1, wherein
the third screen group (W26, W28) includes at least a screen related to network settings of the communication apparatus.

6. The screen display method of the communication apparatus (100, 103) according to claim 5, wherein
an input of the device setting to the third screen group (W26, W28) is restricted until an input of the device setting to the first screen group (W14, W16, W18, W20) is received.

7. The screen display method of the communication apparatus (100, 103) according to claim 1, wherein
one or both of the second screen group (W22, W24) and the third screen group (W26, W28) are displayed after display of the first screen group (W14, W16, W18, W20).

8. The screen display method of the communication apparatus (100, 103) according to claim 1, further comprising
a fourth screen group which receives a device setting other than the device settings received by the first screen group (W14, W16, W18, W20), the second screen group (W22, W24), and the third screen group (W26, W28).

9. The screen display method of the communication apparatus (100, 103) according to claim 1, wherein
a configuration of the screen group or the screen belonging to the screen group included in the initial setting wizard is changed according to a place of destination of the communication apparatus (100, 103).

10. A communication apparatus (100, 103) comprising:
a display (13) which displays a screen group including screens having identical screen attributes as an initial setting wizard executed at a time of initial activation; and
one or more controllers (11) which control the display of the initial setting wizard on the display (13),
wherein the screen group includes
at least a first screen group (W14, W16, W18, W20) having a screen attribute which receives an essential device setting to accommodate various legal regulations, a second screen group (W22, W24) having a screen attribute which receives a device setting that is recommended to accommodate the various legal regulations, and a third screen group (W26, W28) having a screen attribute which receives one or more device settings necessary for a user to use the communication apparatus.
